# EUROPEAN PATENT SPECIFICATION

(11) **EP 1 639 418 B1**
(45) Date of publication and mention of the grant of the patent: **28.09.2011**
(21) Application number: 04755977.8
(22) Date of filing: 22.06.2004
(51) Int. Cl.: G05D 16/10, G05D 7/00

(54) **PRESSURE REGULATOR WITH INTEGRATED REVERSE PRESSURE EXHAUST**
Druckregler mit integriertem Überdruckauslassventil
Régulateur de pression équipé d'un mécanisme d'évacuation des surpressions

(30) Priority: 27.06.2003 US 608663
(43) Date of publication of application: 29.03.2006
(73) Proprietor: FISHER CONTROLS INTERNATIONAL LLC, St. Louis, MO 63136 (US)
(72) Inventor: HART, Justine, Wade, Melissa, TX 75454 (US); DAVIS, David, Blair, Whitewright, TX 75491 (US); SCHNEIDER, Gregg, Alan, Corinth, TX 76210 (US); BERRY, Steven, Ernest, Conrad, IA 50621 (US)
(74) Representative: Bohnenberger, Johannes
(86) International application number: PCT/US2004/020189
(87) International publication number: WO 2005/003876

(56) References cited:
- EP-A2- 0 462 432
- GB-A- 393 761
- GB-A- 821 053
- GB-A- 2 196 401
- US-A- 3 941 148
- US-A- 4 147 179
- US-A- 5 090 438

## Description

### Field of the Invention

The present invention relates to process control apparatus and, more particularly, relates to regulators for providing pressurized fluid at a predetermined level.

### Background of the Invention

In many process control environments, the flow of the process fluid is regulated by one or more control valves as shown in US 3,941,148. The control valves themselves can be provided in a number of forms including those using control elements in the form of sliding stems, butterfly plates, and rotary balls to adjust a variably sized opening between an inlet and an outlet of the valve. The control element itself is controlled by an actuator physically coupled to the control element. The actuator can also be provided in a number of forms including those employing a diaphragm with upper and lower pressure chambers flanking the diaphragm. By controlling the pressure differential between the first and second chambers, the diaphragm can be caused to move upwardly or downwardly relative to the control valve and in turn move the diaphragm, associated actuator stem, and control element.

Accordingly, it can be seen that it is important to supply the actuator with fluids at known pressures. In the case of the aforementioned diaphragm actuator, pressurized air is often used as the fluid and is provided by way of a regulator as shown in US 4,147,179. The regulator includes a housing having an inlet and an outlet, with the inlet being connected to a source of compressed air such as a compressor of the plant in which the regulator is provided. Such plants may be provided in the form of refineries, chemical processing plants, food processing plants, or any other type of process control environment wherein regulation of pressure and flow of fluids is important. The regulator housing further includes an outlet adapted to be connected to the valve actuator with a movable plug situated in the housing between the inlet and the outlet. Depending on the position of the plug within a passageway connecting the inlet to the outlet, the pressure provided by the regulator can either be increased or decreased to a predetermined or known volume for accurate supply to the actuator.

In order to control the flow of such pressurized fluid from the regulator to the actuator, a positioner (sometimes referred to as a controller or an instrument), is provided therebetween. The positioner may receive a signal from a processor of the facility or plant, with that signal being representative of the desired flow of the process fluid. Based on the received control signal, the positioner then determines the required valve position, and allows the pressurized fluid from the regulator to pass to the valve actuator as appropriate to provide the correct valve position and ultimately the desired process fluid flow.

In addition to providing for an accurately regulated level of pressurized fluid to the actuator, such systems also must provide a mechanism by which the control valve can fail into a safe position. As indicated above, such control valves are often used in refineries or chemical processing plants where it is imperative that the valve fail to a safe position. This safe position may mean that the control valve fails to a fully open or fully closed position. In either event, in order for the control valve to reach such a position, the pressurized fluid within the actuator controlling the control valve must be fully dissipated or exhausted from the system. However, as the actuator receives the pressurized fluid from the regulator, it is the regulator which must be provided with some form of mechanism for bleeding the excess pressure from the valve actuator. Methods to improve steady state bleed to atmosphere of the regulator outlet pressure include, but are not limited to, fixed diameter internal and external bleed orifices. However, such designs require that regulator outlet pressure constantly vent to atmosphere thereby creating audible noise from escaping air, creating a higher demand on the compressor system of the plant, and giving false indications of a mechanical defect or failure.

Accordingly, it can be seen that a need exists for an improved regulator design which allows for quick and reliable exhaust of excess regulator outlet pressure when desired.

### Summary of the Invention

In accordance with the invention, a valve system according to claim 1 is provided, comprising: a control valve regulating flow of a process fluid; a valve actuator coupled to the control valve, the valve actuator having an upper chamber and a lower chamber and being driven by pressurized fluid; and a regulator operatively associated with the valve actuator, the regulator supplying fluid at a specified pressure to the valve actuator, the regulator including a regulator inlet, a regulator outlet, and a plug therebetween. The valve system is characterised in that the regulator further includes a reverse pressure exhaust valve adapted to connect the regulator outlet to the regulator inlet when the pressure within the regulator outlet is greater than the pressure within the regulator inlet by a predetermined amount, and wherein the valve system further includes a positioner, the positioner receiving a control signal and directing pressurized fluid from the regulator to the upper chamber and/or the lower chamber of the valve actuator based on the control signal..

In accordance with the invention, a method according to claim 12 of operating a control valve system is provided, comprising: directing pressurized fluid from a regulator to a valve actuator to change the position of the valve actuator; changing the position of a control valve based on the change in position of the valve actuator. The method is characterised by further comprising: relieving excess pressure from the valve actuator when it is desired to have the control valve fail to a certain position, the excess pressure being relieved through a reverse pressure exhaust valve provided in the regulator; wherein the pressured fluid is directed from the regulator to an upper chamber and/or a lower chamber of the valve actuator by a positioner based on a control signal..

These and other aspects and features of the invention will become more readily apparent upon reading the following detailed description when taken in conjunction with the accompanying drawings.

### Brief Description of the Drawings

Fig. 1 is a block diagram depicting a valve system constructed in accordance with the teachings of the invention;

Fig. 2 is a sectional view of a regulator constructed in accordance with the teachings of the invention; and

Fig. 3 is a sectional view of a reverse pressure exhaust valve provided within a regulator constructed in accordance with the teachings of the invention.

### Detailed Description of the Invention

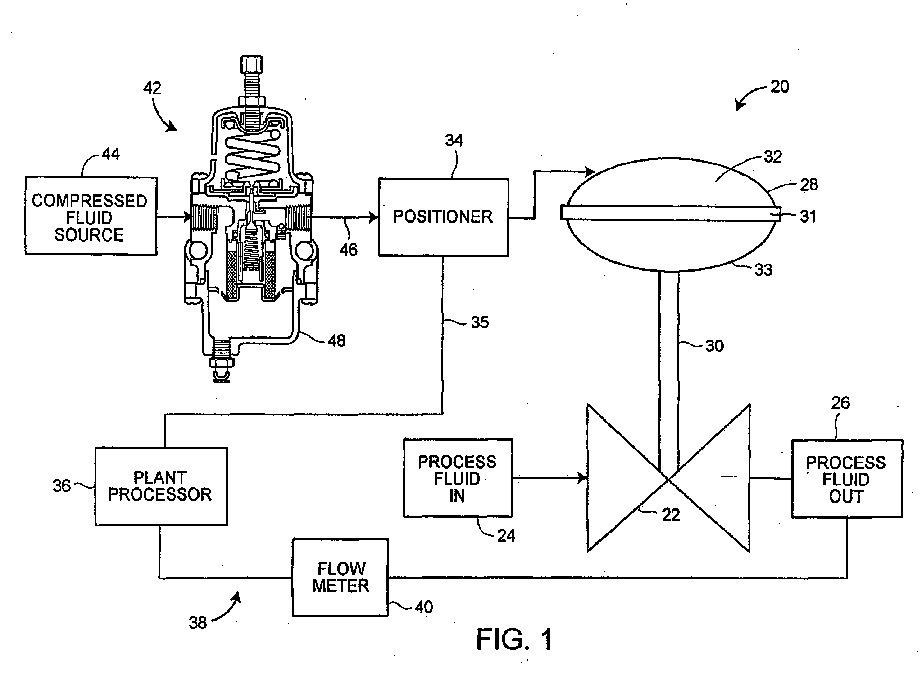

Referring now to the drawings, and with specific reference to Fig. 1, a valve system constructed in accordance with the teachings of the invention is generally referred to by reference numeral 20. The valve system can be employed in a variety of different settings including, but not limited to, refineries, chemical processing plants, food processing plants, and the like. In each of the envisioned settings, the valve system 20 can be employed to regulate the flow of a process fluid to a desired pressure, flow rate, and volume.

Referring again to Fig. 1, the valve system 20 is shown to include a control valve 22 adapted to control or regulate flow of a process fluid between an inlet 24 and an outlet 26. As indicated above, the control valve 22 can employ any number of different structures for doing so including, but not limited to, sliding stems, butterfly plates, and rotary balls.

Connected to the control valve 22 is a valve actuator 28, which is so connected by a stem 30, coupled to the control element of the control valve 22. Accordingly, movement of the valve actuator 28 controls the position of the control element of the valve 22 and thus the flow of fluid through the system 20. In order to do so, the valve actuator 28 can be provided in a number of forms including pneumatic or other fluidically operated actuators which employ a diaphragm 31 within a housing and disposed between upper 32 and lower chambers 33. By filling the upper and lower chambers with fluids at disparate pressures, a pressure differential is generated across the diaphragm thereby creating movement of the diaphragm. Movement of the diaphragm 31 in turn causes movement of the stem 30, which in turn causes movement of the control element thus changing the position of the control valve 22.

A positioner 34 is shown connected to the valve actuator 28 for supplying pressurized fluid thereto. More specifically, the positioner 34 provides pressurized fluid to the upper chamber 32 and/or lower chamber 33 of the valve actuator 28 to thus control the position of the diaphragm 31. The positioner 34 may do so after receiving a control signal 35 from a plant processor 36 which may be part of an overall control scheme of the plant or facility in which the valve system 20 is employed. The control signal 35 may be predetermined, or may be based on signals received from a feedback loop 38. As shown in Fig. 1, the feedback loop 38 may employ a flow meter or the like 40 which measures process fluid from the outlet 26. Accordingly, if the measured flow is not as desired, the plant processor 36 can generate a suitable control signal 35 for moving the control valve 22 accordingly and thus make the process fluid flow closer to the desired level.

The positioner 34, as indicated above, provides pressurized fluid to the valve actuator 28 based on the control signal 35. However, the positioner 34 itself receives pressurized fluid from a regulator 42. The regulator 42 receives fluid from a source 44 pressured at a first level, and generates fluid 46 pressured at a second level for receipt by the positioner 34. For example, the source 44 may be compressed air provided by a main air compressor of the plant or facility and may be provided at a pressure on the order of thousands of Pascals (hundreds of pounds per square inch (psi)). However, the positioner 34 may only be able to receive pressurized fluid at a much lower pressure level. Accordingly, the regulator 42 may be a pressure reduction type of regulator which receives the compressed fluid of the plant at a relatively high pressure, and steps the compressed air down to a much lower level for use by the positioner 34.

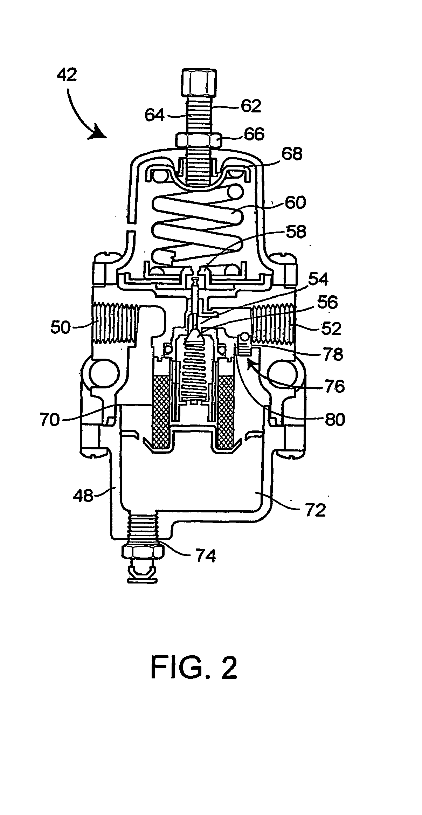

Referring now to Fig. 2, the regulator 42 is shown in further detail. As depicted therein, the regulator 42 includes a housing 48 having an inlet 50 and an outlet 52 with a passageway 54 therebetween. By controlling the cross-sectional area of the passageway 54, the pressure of the fluid flowing through the regulator 42 can be adjusted. This may be done by controlling the position of a moveable plug 56 provided within the passageway 54. While there are a number of different mechanisms by which this movement can be accomplished, it will be noted from Fig. 2 that a moveable plug 56 may be mounted to a plate 58 which, in turn, is movably biased toward the passageway 54 by a spring 60. The degree to which the plate 58 and thus the plug 56 are biased toward the passageway 54 can be adjusted by sizing the spring 60 appropriately, or by adjusting the position of a bolt 62 adapted to impart force on the spring 60. As depicted, the bolt 62 includes a plurality of threads 64, as well as a locking nut 66. Accordingly, as the bolt 62 is rotated, it imparts more or less force upon a top plate 68, which in turn adjusts the degree in which the spring 60 is compressed or pre-loaded.

Fig. 2 also illustrates that the regulator 42 may include a filter assembly 70 within the inlet 50 to reduce the number of particulates passing through the regulator 42 and thus ensuring that the positioner 34 receives relatively clean fluid to thereby prolong its life and improve its accuracy. The regulator 42 may further include a moisture trap 72. The moisture trap 72 may serve as a reservoir for retaining any liquid or condensation removed from the fluid passing through the regulator 42. Accordingly, a drain 74 may be provided within the housing 48 to allow for removal of such liquid.

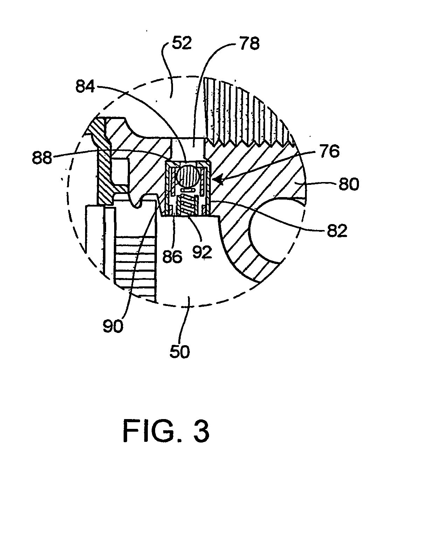

The various chambers of the regulator 42 are provided at different pressures. As the regulator 42 is typically provided in the form of a pressure reduction regulator, wherein the inlet 50 is at a pressure greater than the outlet 52, fluid flow will typically be directed from the inlet 50, through the passageway 54, and through the outlet 52 to the positioner 34. However, as indicated above, it is sometimes necessary for fluid to be evacuated from the outlet 52, or from the positioner 34, or the valve actuator 28. For example, when it is desired for the control valve 22 to fail to a safe position, the control element of the control valve will move either to a fully open or fully closed position. As movement of the control element is controlled by the valve actuator 28, this in turn requires that the upper chamber 32 and/or lower 33 chamber of the valve actuator 28 be fully evacuated to allow for movement of the diaphragm. However, the pressurized fluid can only be evacuated from the valve actuator 28 through the positioner 34 and the regulator 42. As opposed to prior art regulators which provided a bleed orifice within the regulator which constantly bled off excess pressure at the expense of increased audible output, the present invention provides an integrated reverse pressure exhaust (IRPE) valve 76 directly within the regulator 42 between the inlet 50 and outlet 52. Specifically, it will be noted that the IRPE valve 76 may be provided within a hole 78 drilled into an interior wall 80 of the housing or body 48. The IRPE valve 76 may be provided in a variety of forms, but in the depicted embodiment shown in FIG. 3, includes a housing 82 having an inlet 84 and an outlet 86 with a valve seat 88 therebetween. A control element 90 such as a ball or the like is biased against the valve seat 88 by a spring 92 in the direction of the inlet 84. The IRPE valve 76 is positioned such that the IRPE outlet 86 is proximate the regulator inlet 50, and the IRPE inlet 84 is proximate the regulator outlet 52.

It can accordingly be seen by one of ordinary skill in the art that the IRPE valve 76 provides a mechanism by which excess pressure within the outlet 52 can be alleviated and thus enable the control valve 22 to reach its desired fail-safe position. This can be accomplished any time the pressure differential between regulator inlet and outlet 50, 52 reaches a predetermined level. The predetermined level may be dictated by the size of the spring 92. In the depicted embodiment, the spring 92 is sized so as to be compressed and thereby open the IRPE valve 76, whenever the pressure within the outlet 52 is greater than the pressure within the inlet 50 by 41.4 Pa (six psi) or more. Of course, the IRPE valve 76 can be sized so as to be opened at any other desired pressure differential as well.

In operation, it can therefore be seen that the valve system 20 provides a system by which process fluid can be accurately regulated and controlled between the inlet 24 and outlet 26. This is done by using the valve actuator 28 to control the position of the control valve 22. However, when it is desired for the valve 22 to fail to a fully open or fully closed position, the valve actuator 28 is provided with a mechanism by which excess pressure therein can be quickly and accurately alleviated not only through the positioner 34, but through the regulator 42 as well. This is done by providing the IRPE valve 76 directly within the regulator 42 which is openable whenever the pressure differential within the regulator 42 exceeds a predetermined threshold. Once that pressure differential is reached, the IRPE valve 76 opens and thus the excess pressure within the outlet 52 is relieved, and the valve 22 can reach its fail-safe position. Moreover, once the excess pressure within the outlet 52 is alleviated, the IRPE valve 76 automatically closes, thereby positioning the valve system 20 again for normal operation.

## Claims

1. A valve system (20), comprising:
a control valve (22) regulating flow of a process fluid;
a valve actuator (28) coupled to the control valve (22), the valve actuator (28) having an upper chamber (32) and a lower chamber (33) and being driven by pressurized fluid; and
a regulator (42) operatively associated with the valve actuator (28), the regulator (42) supplying fluid at a specified pressure to the valve actuator (28), the regulator (42) including a regulator inlet (50), a regulator outlet (52), and a plug (56) therebetween,
**characterised in that**: the regulator (42) further includes a reverse pressure exhaust valve (76) adapted to connect the regulator outlet (52) to the regulator inlet (50) when the pressure within the regulator outlet (52) is greater than the pressure within the regulator inlet (50) by a predetermined amount, and
wherein the valve system (20) further includes a positioner (34), the positioner (34) receiving a control signal (35) and directing pressurized fluid from the regulator (42) to the upper chamber (32) and/or the lower chamber (33) of the valve actuator (28) based on the control signal (35).

2. The valve system of claim 1, further including a moisture trap (72) disposed between the regulator inlet (50) and the regulator outlet (52).

3. The valve system of claim 1, wherein the predetermined amount is a pressure differential of 41.4 Pa (6 psi).

4. The valve system of claim 1, wherein the regulator (42) further includes a spring (60) biasing the regulator plug (56) into an open position.

5. The valve system of claim 1, wherein the regulator (42) further includes a filter (70) between the regulator inlet (50) and the regulator outlet (52).

6. The valve system of claim 1, wherein the reverse pressure exhaust valve (76) is a one-way check valve, the check valve including a housing (82) having a check valve inlet (84), a check valve outlet (86), a seat (88) between the check valve inlet (84) and the check valve outlet (86) and a movable valve element (90) biased against the seat by a spring (92).

7. The valve system of claim 6, wherein the spring (92) biases the valve element (90) toward the check valve outlet (86).

8. The valve system of any one of the preceding claims, wherein said regulator is a pressure regulator (42), said pressure regulator (42) comprising:
a regulator housing (48), said regulator inlet (50) and said regulator outlet (52) being provided in said regulator housing (48); and
a passage (54) connecting the regulator inlet (50) to the regulator outlet (52); wherein
said plug (56) is movably connected in the regulator housing (48) and disposed in the passage (54), the plug (56) being movable between a range of positions extending from a first position closing the passage (54), to a second position fully opening the passage (54).

9. The valve system of claim 8, further including a spring (60) in the regulator housing (48) biasing the plug (56) into the fully open position.

10. The valve system of claim 9, further including an adjustment mechanism (62) for changing the degree of bias imparted by the spring (60).

11. The valve system of claim 8, further including a drain (74), wherein the drain (74) is fluidly coupled to the regulator housing (48) and adapted to remove a liquid accumulated in the moisture trap (72).

12. A method of operating a control valve system (20), comprising:
directing pressurized fluid from a regulator (42) to a valve actuator (28) to change the position of the valve actuator (28);
changing the position of a control valve (22) based on the change in position of the valve actuator (28);
the method **characterised by** further comprising:
relieving excess pressure from the valve actuator (28) when it is desired to have the control valve (22) fail to a certain position, the excess pressure being relieved through a reverse pressure exhaust valve (76) provided in the regulator (42);
wherein the pressured fluid is directed from the regulator (42) to an upper chamber (32) and/or a lower chamber (33) of the valve actuator (28) by a positioner (34) based on a control signal (35).

13. The method of claim 12, wherein the excess pressure is exhausted when the pressure within an outlet (52) of the regulator (42) is greater than the pressure within an inlet (50) of the regulator (42) by a predetermined amount.

14. The method of claim 13, wherein the predetermined amount is 41.4 Pa (6 psi).

15. The method of any one of claims 12 to 14, wherein the reverse pressure exhaust valve (76) includes a spring-biased element (90), the excess pressure being exhausted when the pressure in an outlet (52) of the regulator (42) is greater than the pressure in an inlet (50) of the regulator (42) and a pressure differential therebetween creates a force sufficient to overcome a biasing force of the spring (92).

16. The method of any one of claims 12 to 15, further including the step of retaining a condensation of the fluid in a moisture trap (72).

17. The method of any one of claims 12 to 16, wherein the control signal (35) is representative of a desired control valve position.

18. The method of any one of claims 12 to 17, wherein the position of the valve actuator (28) is changed by adjusting the pressure differential in the valve actuator (28).

## Patentansprüche

1. Ventilsystem (20), Folgendes umfassend:
ein Regelventil (22), das den Durchfluss eines Prozessfluids regelt;
ein Ventilstellglied (28), das mit dem Regelventil (22) verbunden ist, wobei das Ventilstellglied (28) eine obere Kammer (32) und eine untere Kammer (33) aufweist und durch Druckfluid angetrieben wird; und
einen Regler (42), der in Wirkverbindung mit dem Ventilstellglied (28) steht, wobei der Regler (42) dem Ventilstellglied (28) Fluid mit einem festgelegten Druck zuführt, wobei der Regler (42) einen Reglereinlass (50), einen Reglerauslass (52) und dazwischen einen Stopfen (56) umfasst,
**dadurch gekennzeichnet, dass**: der Regler (42) darüber hinaus ein Umkehrdruckablassventil (76) umfasst, das dazu ausgelegt ist, den Reglerauslass (52) mit dem Reglereinlass (50) zu verbinden, wenn der Druck im Reglerauslass (52) um einen vorbestimmten Betrag größer ist als der Druck im Reglereinlass (50), und
wobei das Ventilsystem (20) darüber hinaus einen Stellungsgeber (34) umfasst, wobei der Stellungsgeber (34) ein Steuersignal (35) empfängt und Druckfluid auf Grundlage des Regelsignals (35) vom Regler (42) zur oberen Kammer (32) und/oder unteren Kammer (33) des Ventilstellglieds (28) leitet.

2. Ventilsystem nach Anspruch 1, darüber hinaus eine Feuchtigkeitsfalle (72) umfassend, die zwischen dem Reglereinlass (50) und dem Reglerauslass (52) angeordnet ist.

3. Ventilsystem nach Anspruch 1, wobei es sich bei dem vorbestimmten Betrag um eine Druckdifferenz von 41,4 Pa (6 psi) handelt.

4. Ventilsystem nach Anspruch 1, wobei der Regler (42) darüber hinaus eine Feder (60) umfasst, die den Reglerstopfen (56) in eine offene Stellung vorspannt.

5. Ventilsystem nach Anspruch 1, wobei der Regler (42) darüber hinaus einen Filter (70) zwischen dem Reglereinlass (50) und dem Reglerauslass (52) umfasst.

6. Ventilsystem nach Anspruch 1, wobei das Umkehrdruckablassventil (76) ein Einwegrückschlagventil ist, wobei das Rückschlagventil ein Gehäuse (82) mit einem Rückschlagventileinlass (84), einem Rückschlagventilauslass (86), einem Sitz (88) zwischen dem Rückschlagventileinlass (84) und dem Rückschlagventilauslass (86), und ein bewegliches Ventilelement (90) umfasst, das durch eine Feder (92) gegen den Sitz vorgespannt ist.

7. Ventilsystem nach Anspruch 6, wobei die Feder (92) das Ventilelement (90) zum Rückschlagventilsauslass (86) hin vorspannt.

8. Ventilsystem nach einem der vorhergehenden Ansprüche, wobei der Regler ein Druckregler (42) ist, wobei der Druckregler (42) umfasst:
ein Reglergehäuse (48), wobei der Reglereinlass (50) und der Reglerauslass (52) in dem Reglergehäuse (48) vorgesehen sind; und
einen Durchgang (54), der den Reglereinlass (50) mit dem Reglerauslass (52) verbindet; wobei
der Stopfen (56) beweglich im Reglergehäuse (48) angeschlossen und in dem Durchgang (54) angeordnet ist, wobei der Stopfen (56) zwischen einem Bereich von Positionen beweglich ist, der sich von einer ersten Position, die den Durchgang (54) verschließt, zu einer zweiten Position erstreckt, die den Durchgang (54) vollständig öffnet.

9. Ventilsystem nach Anspruch 8, darüber hinaus eine Feder (60) im Reglergehäuse (48) umfassend, die den Stopfen (56) in die vollständig offene Position vorspannt.

10. Ventilsystem nach Anspruch 9, darüber hinaus einen Einstellmechanismus (62) zum Ändern des Grads der durch die Feder (60) mitgeteilten Vorspannung umfassend.

11. Ventilsystem nach Anspruch 8, darüber hinaus einen Abfluss (74) umfassend, wobei der Abfluss (74) fluidtechnisch mit dem Reglergehäuse (48) verbunden und dazu ausgelegt ist, eine Flüssigkeit zu entfernen, die sich in der Feuchtigkeitsfalle (72) angesammelt hat.

12. Verfahren zum Betätigen eines Regelventilsystems (20), Folgendes umfassend:
Leiten von Druckfluid von einem Regler (42) zu einem Ventilstellglied (28), um die Stellung des Ventilstellglieds (28) zu verändern;
Ändern der Stellung eines Regelventils (22) auf Grundlage der Stellungsveränderung des Ventilstellglieds (28);
wobei das Verfahren **dadurch gekennzeichnet ist, dass** es darüber hinaus umfasst:
Ablassen von überschüssigem Druck aus dem Ventilstellglied (28), wenn gewünscht wird, dass das Regelventil (22) eine bestimmte Stellung nicht erreicht, wobei der überschüssige Druck durch ein Umkehrdruckablassventil (76) abgelassen wird, das im Regler (42) vorgesehen ist;
wobei das Druckfluid durch einen Stellungsgeber (34) auf Grundlage eines Steuersignals (35) zu einer oberen Kammer (32) und/oder einer unteren Kammer (33) des Ventilstellglieds (28) geleitet wird.

13. Verfahren nach Anspruch 12, wobei der überschüssige Druck abgelassen wird, wenn der Druck in einem Auslass (52) des Reglers (42) um einen vorbestimmten Betrag größer ist als der Druck in einem Einlass (50) des Reglers (42).

14. Verfahren nach Anspruch 13, wobei es sich bei dem vorbestimmten Betrag um 41,1 Pa (6 psi) handelt.

15. Verfahren nach einem der Ansprüche 12 bis 14, wobei das Umkehrdruckablassventil (76) eine federbeaufschlagtes Element (90) umfasst, wobei der überschüssige Druck abgelassen wird, wenn der Druck in einem Auslass (52) des Reglers (42) größer ist als der Druck in einem Einlass (50) des Reglers (42), und eine dazwischen bestehende Druckdifferenz eine Kraft erzeugt, die ausreicht, um eine Vorspannkraft der Feder (92) zu überwinden.

16. Verfahren nach einem der Ansprüche 12 bis 15, darüber hinaus einen Schritt des Beibehaltens einer Kondensation des Fluids in einer Feuchtigkeitsfalle (72) umfassend.

17. Verfahren nach einem der Ansprüche 12 bis 16, wobei das Steuersignal stellvertretend für eine gewünschte Regelventilstellung ist.

18. Verfahren nach einem der Ansprüche 12 bis 17, wobei die Stellung des Ventilstellglieds (28) durch Einstellen der Druckdifferenz im Ventilstellglied (28) verändert wird.

## Revendications

1. Système formant vanne (20), comprenant :
une vanne de commande (22) régulant un écoulement d'un fluide de procédé ;
un actionneur de vanne (28) couplé à la vanne de commande (22), l'actionneur de vanne (28) présentant une chambre extérieure (32) et une chambre inférieure (33) et étant entraîné par un fluide sous pression ; et
un régulateur (42) associé de manière fonctionnelle à l'actionneur de vanne (28), le régulateur (42) fournissant un fluide à une pression spécifiée à l'actionneur de vanne (28), le régulateur (42) comprenant une entrée de régulateur (50), une sortie de régulateur (52), et un bouchon (56) situé entre ceux-ci,
**caractérisé en ce que** : le régulateur (42) comprend en outre une soupape d'échappement à pression inverse (76) adaptée pour connecter la sortie de régulateur (52) à l'entrée de régulateur (50) lorsque la pression dans la sortie de régulateur (52) est supérieure d'un montant prédéterminé à la pression dans l'entrée de régulateur (50), et
où le système formant vanne (20) comprend en outre un positionneur (34), le positionneur (34) recevant un signal de commande (35) et dirigeant un fluide sous pression depuis le régulateur (42) vers la chambre extérieure (32) et/ou la chambre inférieure (33) de l'actionneur de vanne (28) sur la base du signal de commande (35).

2. Système formant vanne selon la revendication 1, comprenant en outre un pot de condensation (72) disposé entre l'entrée de régulateur (50) et la sortie de régulateur (52).

3. Système formant vanne selon la revendication 1, dans lequel la quantité prédéterminée est un différentiel de pression de 41,4 Pa (6 psi).

4. Système formant vanne selon la revendication 1, dans lequel le régulateur (42) comprend en outre un ressort (60) forçant le bouchon de régulateur (56) dans une position ouverte.

5. Système formant vanne selon la revendication 1, dans lequel le régulateur (42) comprend en outre un filtre (70) présent entre l'entrée de régulateur (50) et la sortie de régulateur (52).

6. Système formant vanne selon la revendication 1, dans lequel la soupape d'échappement à pression inverse (76) est une soupape de non-retour, la soupape de non-retour comprenant un carter (82) présentant une entrée de soupape de non-retour (84), une sortie de soupape de non-retour (86), un siège (88) entre l'entrée de soupape de non-retour (84) et la sortie de soupape de non-retour (86) et un élément formant vanne mobile (90) forcé contre le siège par un ressort (92).

7. Système formant vanne selon la revendication 6, dans lequel le ressort (92) force l'élément de vanne (90) vers la sortie de soupape de non-retour (86).

8. Système formant vanne selon l'une quelconque des revendications précédentes, dans lequel ledit régulateur est un régulateur de pression (42), ledit régulateur de pression (42) comprenant :
un carter de régulateur (48), ladite entrée de régulateur (50) et ladite sortie de régulateur (52) étant fournies dans ledit carter de régulateur (48) ; et
un passage (54) connectant l'entrée de régulateur (50) à la sortie de régulateur (52) ;
dans lequel
ledit bouchon (56) est connecté de manière mobile dans le carter de régulateur (48) et est disposé dans le passage (54), le bouchon (56) étant mobile parmi une plage de positions s'étendant depuis une première position fermant le passage (54) jusqu'à une seconde position ouvrant complètement le passage (54).

9. Système formant vanne selon la revendication 8, comprenant en outre un ressort (60) dans le carter de régulateur (48) forçant le bouchon (56) dans la position complètement ouverte.

10. Système formant vanne selon la revendication 9, comprenant en outre un mécanisme d'ajustement (62) pour modifier le degré de la force imprimée au ressort (60).

11. Système formant vanne selon la revendication 8, comprenant en outre une vidange (74), dans lequel la vidange (74) est couplée fluidiquement au carter de régulateur (48) et est adaptée pour retirer un liquide accumulé dans le pot de condensation (72).

12. Procédé de fonctionnement d'un système formant vanne de commande (20), comprenant les étapes suivantes consistant à :
diriger un fluide sous pression depuis un régulateur (42) vers un actionneur de vanne (28) pour modifier la position de l'actionneur de vanne (28) ;
modifier la position d'une vanne de commande (22) sur la base de la modification de position de l'actionneur de vanne (28) ;
le procédé étant **caractérisé par le fait qu'**il comprend en outre l'étape consistant à :
abaisser l'excès de pression en provenance de l'actionneur de vanne (28) lorsque l'on souhaite que la vanne de commande (22) ne parvienne pas à une certaine position, l'excès de pression étant abaissé grâce à une soupape d'échappement à pression inverse (76) fournie dans le régulateur (42) ;
où le fluide sous pression est dirigé du régulateur (42) vers une chambre supérieure (32) et/ou une chambre inférieure (33) de l'actionneur de vanne (28) par un positionneur (34) sur la base d'un signal de commande (35).

13. Procédé selon la revendication 12, dans lequel l'excès de pression est éliminé lorsque la pression dans une sortie (52) du régulateur (42) est supérieure d'un montant prédéterminé à la pression dans une entrée (50) du régulateur (42).

14. Procédé selon la revendication 13, dans lequel le montant prédéterminé est de 41,4 Pa (6 psi).

15. Procédé selon l'une quelconque des revendications 12 à 14, dans lequel la soupape d'échappement à pression inverse (76) inclut un élément (90) forcé par un ressort, l'excès de pression étant éliminé lorsque la pression dans une sortie (52) du régulateur (42) est supérieure à la pression dans une entrée (50) du régulateur et un différentiel de pression entre celles-ci crée une force suffisante pour surmonter une force appliquée par le ressort (92).

16. Procédé selon l'une quelconque des revendications 12 à 15, comprenant en outre l'étape consistant à retenir une condensation du fluide dans un pot de condensation (72).

17. Procédé selon l'une quelconque des revendications 12 à 16, dans lequel le signal de commande (35) est représentatif d'une position de vanne de commande souhaitée.

18. Procédé selon l'une quelconque des revendications 12 à 17, dans lequel la position de l'actionneur de vanne (28) est modifiée par ajustement du différentiel de pression dans l'actionneur de vanne (28).
